# FASCICULE DE BREVET EUROPEEN

(11) **EP 3 627 090 B1**
(45) Date de publication et mention de la délivrance du brevet: **18.08.2021**
(21) Numéro de dépôt: 19196275.2
(22) Date de dépôt: 09.09.2019
(51) Int. Cl.: F41A 23/18, B60R 7/14

(54) **SUPPORT POUR ARME INDIVIDUELLE**
HALTERUNG FÜR EINZELWAFFE
SUPPORT FOR INDIVIDUAL WEAPON

(30) Priorité: 19.09.2018 FR 1801029
(43) Date de publication de la demande: 25.03.2020
(73) Titulaire: NEXTER Systems, 78034 Versailles Cedex (FR)
(72) Inventeur: Lashermes, Anne Claire, 18023 Bourges (FR); Guillermin, Johann, 18023 Bourges (FR)
(74) Mandataire: Cabinet Chaillot

(56) Documents cités:
- WO-A1-2015/192098
- US-A1- 2011 114 687
- US-B1- 6 206 261

## Description

Le domaine technique de l'invention est celui des supports pour arme individuelle à bord des véhicules.

Lors du transport de fantassins à bord d'un véhicule, il est classiquement connu que ceux-ci placent chacun leur arme de type fusil d'assaut dans un support capable de maintenir l'arme sans bouger malgré les secousses inhérentes au transport. Il est également nécessaire que l'arme soit protégée contre les agressions extérieures de type chocs, poussières, ou tout simplement placée hors de vue.

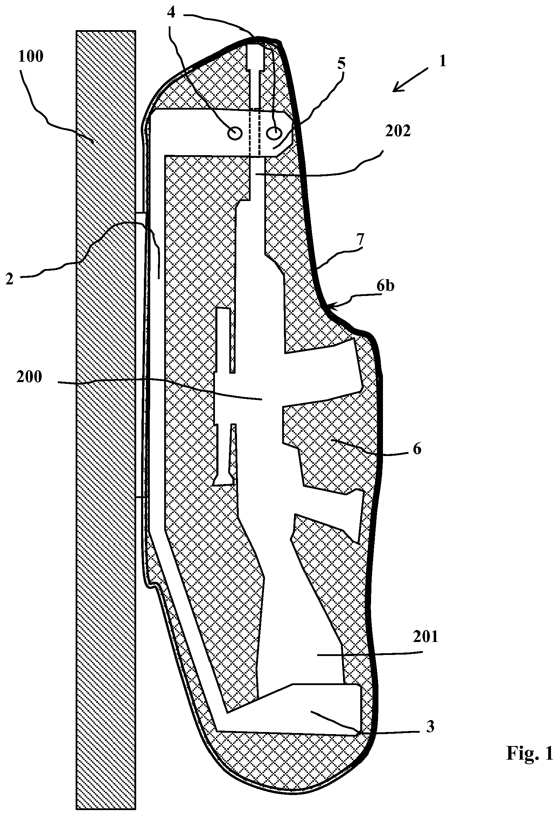

Pour ce faire il est connu, au sein de l'armée Française sous la référence H0170500862, un support d'arme individuelle représenté figure 1 qui comporte un châssis rigide solidarisable à une paroi d'un véhicule.

Le châssis comporte un sabot apte à caler la crosse de l'arme ainsi qu'un crochet apte à caler le canon de l'arme, immobilisant ainsi l'arme sur le châssis. Une housse textile enveloppe le châssis et l'arme placée en son sein afin de protéger l'ensemble. La housse comporte une fermeture à glissière donnant accès à l'arme placée sur le châssis.

Un tel support équipé de l'arme présente cependant l'inconvénient de former un obstacle contre lequel les fantassins peuvent se heurter douloureusement durant leurs mouvements à bord du véhicule, risquant en plus d'endommager l'arme fixée au support.

Par ailleurs, la mise en place de l'arme dans le support n'est pas aisée puisque, lorsque le support est vide, la housse n'est pas tendue par l'arme et se trouve affalée ce qui encombre l'accès au châssis.

Le textile utilisé pour la housse ne présente pas une protection thermique suffisante contre les risques de brulures pouvant être occasionnées par le canon d'une arme fraichement utilisée puis placée dans le support.

Les brevets US6206261 et US2011/0114687 décrivent des fourreaux ou boîtiers pour arme qui comportent une coque rigide revêtue à l'intérieur d'un capitonnage protecteur. La coque rigide peut occasionner des blessures lors d'un choc avec un fantassin voisin par exemple.

L'invention propose de résoudre le problème de sécurité que présentent les risques d'interférence des fantassins avec un support ou avec une coque rigide. En outre l'invention permet une mise en place aisée d'une arme dans un support et évite les risques de brulure.

Ainsi, l'invention a pour objet un support destiné à recevoir une arme individuelle à bord d'un véhicule, support comportant au moins un châssis rigide pouvant être fixé à une cloison du véhicule, support caractérisé en ce que le châssis rigide comporte une barre verticale positionnée au niveau d'une partie arrière du support pour pouvoir être fixée à la cloison et sur laquelle est fixée une structure alvéolaire élastique comportant au moins deux panneaux comportant chacun au moins une face dite interne mutuellement en vis-à-vis, faces internes entre lesquelles l'arme peut être glissée et maintenue par le rapprochement des panneaux qui est assuré par un moyen de maintien, la structure alvéolaire pouvant ainsi fléchir par rapport à la barre verticale du châssis.

Avantageusement, les panneaux sont orientés verticalement afin de recevoir l'arme verticalement.

Avantageusement, la face interne de chaque panneau qui est destinée à être située au voisinage de l'arme est apte à résister à la chaleur émise par une arme venant d'être utilisée.

Avantageusement, la face interne de chaque panneau destinée à être située au voisinage du canon de l'arme est revêtue d'une surface ignifugée.

Avantageusement, les panneaux s'étendent sur une longueur destinée à couvrir l'arme sur toute sa longueur entre l'extrémité du canon de l'arme et l'arrière du boîtier de culasse de l'arme.

Avantageusement, au moins un des panneaux est traversé par une ouverture latérale traversant le panneau et destinée à permettre le passage d'un câble raccordé avec l'arme.

Avantageusement, les moyens de maintien des panneaux comprennent au moins une sangle de maintien solidaire du châssis et ceinturant transversalement les panneaux.

Avantageusement, le support comporte au moins un moyen d'attache rapide solidaire du châssis et destiné à permettre la fixation du support à une cloison du véhicule.

Avantageusement, les moyens de maintien des panneaux comprennent une housse souple dotée d'une fermeture.

L'invention sera mieux comprise à la lecture de la description suivante, description faite à la lumière des dessins en annexe, dessins dans lesquels :
La figure 1 représente une vue d'un support d'arme selon l'état de la technique.
La figure 2 représente une vue en coupe longitudinale d'un support d'arme selon l'invention et selon un premier mode de réalisation.
La figure 3 représente une vue en coupe longitudinale d'un support d'arme selon l'invention et selon un second mode de réalisation.
La figure 4a représente une vue en coupe transversale du support d'arme selon l'invention, le plan de coupe AA étant repéré à la figure 2.
La figure 4b représente une vue en coupe transversale du support d'arme selon l'invention, le plan de coupe BB étant repéré à la figure 3.
La figure 5 représente une vue en coupe transversale de l'invention lors d'une phase d'utilisation.
La figure 6 représente une vue en perspective lors de l'introduction d'une arme dans un support selon l'invention.

Selon la figure 1, un support 1 selon l'état de la technique est solidaire d'une paroi verticale interne 100 d'un véhicule (véhicule non visible). Le support 1 comporte un châssis rigide 2 qui est interfaçable avec la paroi 100 par des moyens classiquement connus de l'Homme du Métier tel que des boulons (boulons non représentés). Une arme longue 200 de type fusil mitrailleur, comportant une crosse 201 et un canon 202, est placée verticalement sur le châssis 2, canon vers le haut. La crosse 201 repose dans un sabot 3 du châssis 2 afin d'éviter à la crosse 201 de glisser horizontalement. Le canon 202 de l'arme 200 est logé entre deux entretoises 4, solidaires du châssis 2, situées entre deux flancs 5 du châssis 2 orthogonaux et placés de part et d'autre d'une extrémité du canon 201.

Le canon 202 étant ainsi entouré par les entretoises 4 et les flancs 5, le retrait de l'arme 200 se fait en faisant coulisser l'arme 200 verticalement vers le haut jusqu'à ce que la crosse 202 soit sortie du sabot 3. L'arme est ensuite pivotée par sa base afin que la crosse 201 ne soit plus en regard du sabot 3, puis elle est translatée selon la direction du canon vers le bas jusqu'à ce que le canon 201 ne soit plus entouré par les flancs 5 et les entretoises 4.

Le support 1 comporte une housse 6 textile apte à entourer le châssis 2 avec l'arme 200 placée dedans. Une fermeture à glissière 7 s'étendant de bas en haut de la housse 6 permet de fermer ou ouvrir une ouverture 6b donnant accès à l'intérieur de la housse 6.

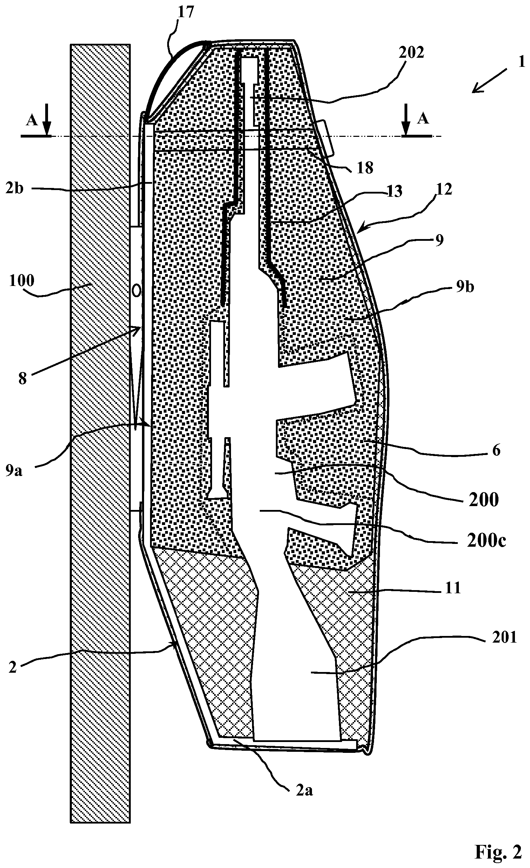

Selon un premier mode de réalisation illustré à la figure 2, un support 1 selon l'invention est solidarisé à une paroi verticale 100 d'un véhicule (véhicule non visible) par des moyens classiquement connus de l'Homme du Métier ou bien par des moyens d'attache rapide 8 rendant le support 1 aisément amovible.

Un exemple de moyens d'attache rapide est décrit dans le brevet US7293754 décrivant une fixation à glissière et broches.

Le support 1 comporte une poignée de transport 17 permettant aussi une solidarisation aisée du support 1 avec la paroi 100. La solidarisation avec la paroi 100 se fait au niveau d'un châssis rigide 2 du support 1. Le châssis 2 comporte une barre 2b s'étend verticalement et qui est prolongée par une platine 2a sensiblement horizontale destinée à servir de surface d'appui à une arme longue 200 disposée verticalement.

Le support 1 comporte une structure alvéolaire élastique 9 qui est rendue solidaire de la barre 2b du châssis 2 par au moins un de ses bords arrière 9a au moyen de bandes auto agrippantes par exemple ou par collage. On entend par structure alvéolaire élastique une structure pouvant être déformée et reprendre sa forme après relâchement de la déformation.

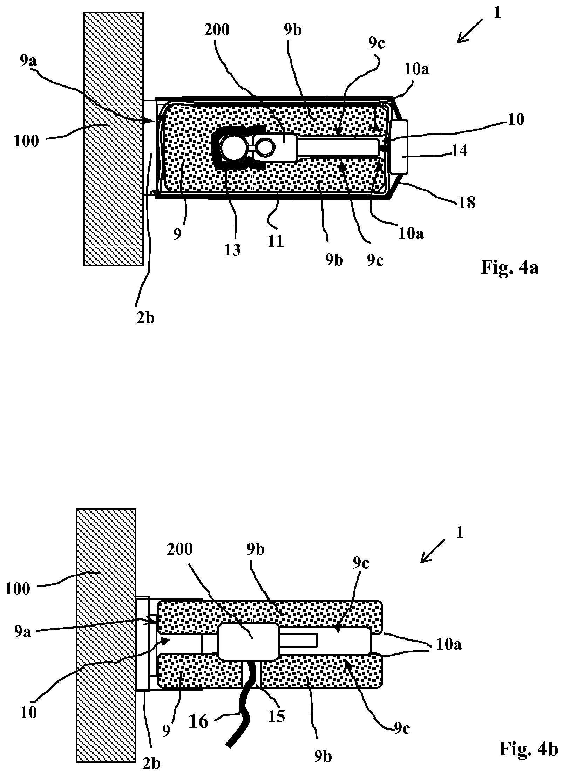

Une telle structure alvéolaire 9 peut par exemple comporter de la mousse polyester ou polyuréthane ou polyéther. La structure 9 comporte au moins deux panneaux 9b qui seront mieux vus aux figures 4a et 4b où, selon la figure 4a, les panneaux 9b sont reliés entre eux par une partie de structure alvéolaire élastique 9 formant une gouttière alors que, selon la figure 4b, les panneaux 9b sont disjoints. Les panneaux 9b s'étendent verticalement et comportent chacun une face dite interne 9c. Les faces internes 9c sont situées en regard l'une de l'autre lorsque aucune arme n'est placée dans le support 1 et délimitent ainsi une fente 10 s'étendant verticalement sur toute la hauteur de la structure 9 et horizontalement depuis un bord de la structure 9 voisin du châssis 2 jusqu'à un bord opposé sur lequel s'ouvre la fente 10.

Ainsi la structure alvéolaire élastique 9 permet de constituer une structure de panneaux souples qui est liée par son bord arrière 9a au châssis rigide 2 (barre 2b) . Cette structure reste donc souple et peut fléchir par rapport à la barre verticale du châssis 2. L'élasticité de la structure alvéolaire 9 confère également une certaine élasticité aux panneaux souples qui pourront revenir à leur position initiale après fléchissement par rapport à la barre verticale 2b du châssis 2.

On notera que dans le second mode de réalisation de la figure 4b, la fente 10 s'étend d'horizontalement jusqu'au châssis 2 alors que pour le premier mode de réalisation illustré à la figure 4a, la fente 10 ne débouche pas horizontalement au niveau du châssis 2.

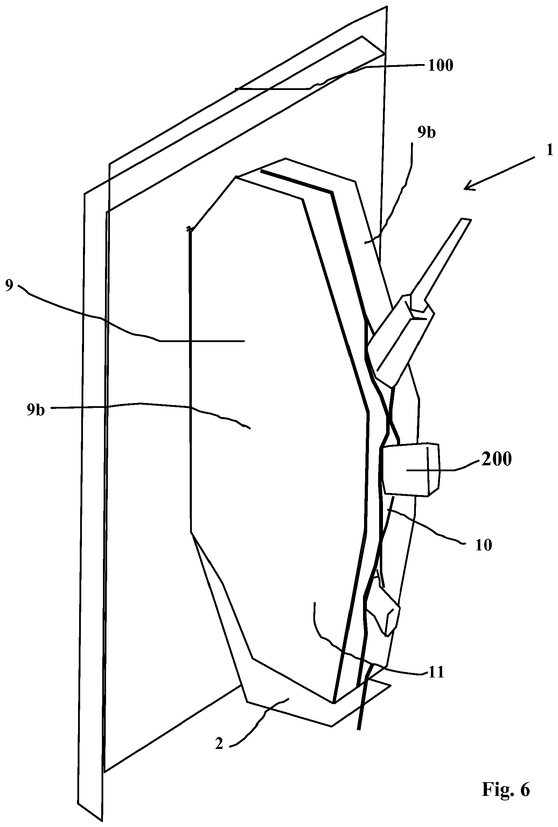

La fente 10 ainsi que les bords arrondis ou chanfreinés 10a des faces internes 9c permettent ainsi de glisser une arme longue 200 entre les deux panneaux et ceci indépendamment de son modèle, avec ou sans accessoires optique comme visible à la figure 6 où l'arme 200 est représentée lors de sa mise en place dans le support 1.

En effet les panneaux 9b ne portent pas d'empreinte dédiée à un modèle d'arme particulier. L'élasticité du matériau des panneaux permet la mise en place de tout type d'arme et son maintien est assuré par le rapprochement des panneaux 9b l'un de l'autre, rapprochement qui est effectué par un moyen de maintien tel une housse 11 et/ou une sangle 18.

L'Homme du métier dimensionnera et choisira le matériau des panneaux et le moyen de maintien afin que l'élasticité et la souplesse des panneaux soit suffisante pour admettre une déformation propice au passage de l'arme et que les moyens de maintien associés aux panneaux puissent appliquer un effort de compression sur l'arme qui est propre à maintenir celle-ci verticalement par coincement. L'arme 200 est par ailleurs bloquée en translation vers le bas par l'appui de sa crosse 201 sur la platine 2a.

On notera que la partie basse de la structure 9 n'est pas solidaire du châssis 2, ceci afin de permettre l'écartement des panneaux 9b vers l'extérieur lors de l'introduction de l'arme 200. Ainsi les panneaux 9b ne s'étendent pas jusqu'à l'arrière de la crosse 201.

Selon le premier mode de réalisation des figures 2 et 4a, le support comporte une housse textile 11 qui entoure au moins la structure alvéolaire 9 et la partie basse du châssis 2. La housse 11 est collée à la structure 9 afin de ne pas s'affaler et comporte une fermeture à glissière 12 donnant accès à la fente 10 de la structure 9. La housse 11 forme ici le moyen de maintien des panneaux 9b.

Une sangle 18 avec un fermoir 14 peut également être mise en place pour compléter les moyens de maintien en ceinturant le support 1. On évite ainsi toute sortie impromptue de l'arme 200 lors de secousses transmises par le véhicule en déplacement par exemple.

La structure alvéolaire 9 s'étend verticalement de manière à pouvoir couvrir l'arme 200 depuis l'extrémité du canon jusqu'au boitier de culasse 200c au moins.

Les faces internes 9c des panneaux 9b doivent pouvoir résister à la chaleur éventuellement émise par une arme fraichement utilisé. L'Homme du Métier choisira donc de préférence un matériau pour la structure alvéolaire 9 qui soit capable de résister à plus de 300°C, qui est la température fréquemment mesurée après un tir soutenu pour les armes de petit calibre. Un tel matériau pourra comporter par exemple du feutre aiguilleté de verre et de Silice.

L'Homme du Métier pourra également choisir d'appliquer un revêtement 13 ignifugé sur les zones de la structure alvéolaire 9 appelées à être en contact avec le canon 202 ou d'autres parties chaudes de l'arme 200. Un tel revêtement 13 peut comporter par exemple du polytétrafluorocarbone.

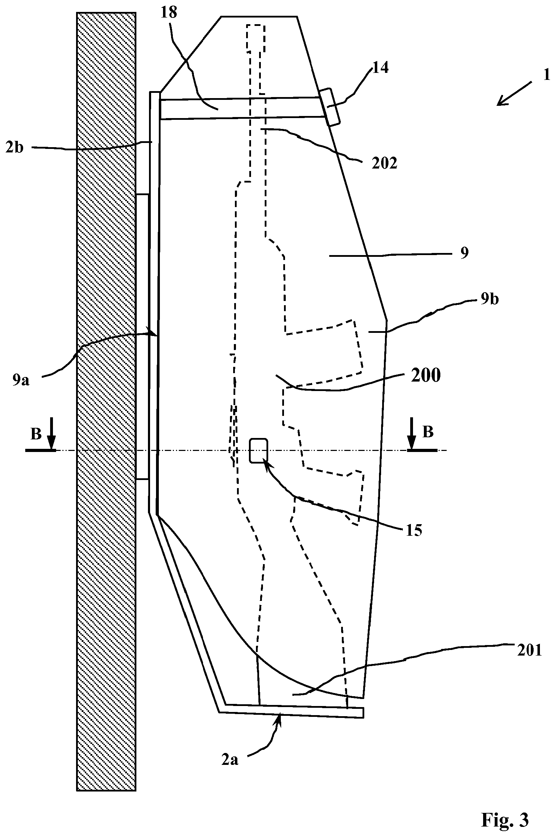

Selon le mode de réalisation de la figure 3, un panneau 9b de la structure 9 est traversé par une ouverture latérale 15 destinée au passage par exemple d'un cordon électrique 16 pouvant être branché sur l'arme 200. L'ouverture 15 peut aussi laisser passer un câble antivol relié à l'arme 200. On notera que selon ce mode de réalisation, le support ne comporte pas de housse textile. Les panneaux 9b solidaires de la barre verticale 2b au niveau de leur bord arrière 9a sont rapprochés l'un de l'autre par un moyen de maintien formé par une simple sangle 18 qui est solidaire du châssis 2 et qui ceinture transversalement les panneaux 9b.

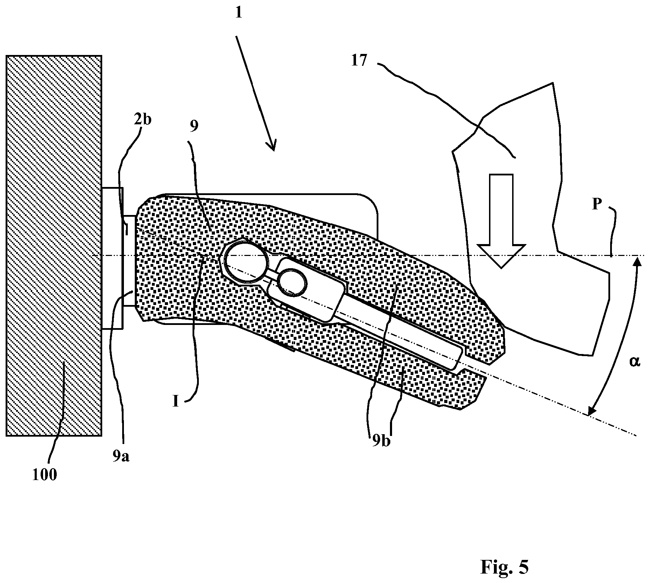

Comme on le voit à la figure 5, la structure alvéolaire souple 9 et son moyen de solidarisation avec le châssis 2 sont dimensionnés pour autoriser une oscillation de la structure alvéolaire 9 contenant l'arme 200 sur un angle α qui pourra avoisiner les 30 degrés de part et d'autre d'un plan P défini par les faces internes des panneaux 9b et autour d'un axe I contenu dans ce plan et situé au voisinage du bord arrière 9a des panneaux qui forme la zone de solidarisation de la structure 9 avec le châssis 2.

De cette façon, lorsqu'un fantassin heurte un support 1 avec l'un de ses membres 17 la structure 9 peut fléchir sans occasionner de blessure au fantassin. La solidarisation des panneaux 9b avec le châssis et le caractère élastique du matériau des panneaux 9b permet à la structure 9 de retrouver sa position initiale lorsque l'appui du fantassin sur la structure 9 cesse. La structure 9 peut ainsi osciller de part et d'autre du plan P et n'entrave pas le passage, ni dans un sens ni dans l'autre, lorsqu'elle est heurtée.

De plus, la structure 9 peut également se déformer élastiquement à l'intérieur des panneaux 9b empêchant ainsi d'endommager l'arme 200 suite à une compression locale d'un panneau 9b.

Il est intéressant de noter que le caractère élastiquement compressible du matériau des panneaux 9b permet une adaptation des panneaux à la forme de l'arme qui est maintenue par compression entre les panneaux 9b.

Ceci confère à la structure une grande adaptabilité au positionnement de l'arme quelle que soit la forme de cette dernière. En effet, l'arme peut être mise en place, canon vers le bas par exemple, et poignée vers l'intérieur ou vers l'extérieur selon le besoin de l'utilisateur. De même, d'autres types d'armes, équipées ou non de viseur, peuvent être positionnés sur le support 1 sans qu'il soit nécessaire de le modifier.

Selon un autre mode de réalisation, la face interne des panneaux 9b peut être prémoulée en demi-coquille épousant la demi-forme d'une arme sur chaque face en regard. Ceci vise à favoriser la mise en place et le maintien dans une position précise d'un type d'arme particulier afin de favoriser un rangement plus rigoureux de l'arme. Ceci n'interdit pas cependant de maintenir un autre type d'arme dans la structure 1 qui reste fortement adaptable.

## Revendications

1. Support (1) destiné à recevoir une arme (200) individuelle à bord d'un véhicule (100), ledit support (1) comportant au moins un châssis (2) rigide pouvant être fixé à une cloison (100) du véhicule, ledit support (1) **caractérisé en ce que** le châssis rigide (2) comporte une barre verticale (2b) positionnée au niveau d'une partie arrière du support pour pouvoir être fixée à la cloison (100) et sur laquelle est fixée une structure (9) alvéolaire élastique comportant au moins deux panneaux (9b) comportant chacun au moins une face (9c) dite interne mutuellement en vis-à-vis, faces internes (9c) entre lesquelles l'arme (200) peut être glissée et maintenue par le rapprochement des panneaux (9b) qui est assuré par un moyen de maintien (11,18), la structure alvéolaire (9) pouvant ainsi fléchir par rapport à la barre verticale du châssis (2).

2. Support (1) selon la revendication 1, **caractérisé en ce que** les panneaux (9b) sont orientés verticalement afin de recevoir l'arme (200) verticalement.

3. Support (1) selon une des revendications précédentes, **caractérisé en ce que** la face interne (9c) de chaque panneau (9b) qui est destinée à être située au voisinage de l'arme (200) est apte à résister à la chaleur émise par une arme venant d'être utilisée.

4. Support (1) selon la revendication 3, **caractérisé en ce que** la face interne (9c) de chaque panneau (9b) destinée à être située au voisinage du canon (201) de l'arme (200) est revêtue d'une surface ignifugée (13).

5. Support (1) selon l'une des revendications précédentes, **caractérisé en ce que** les panneaux (9b) s'étendent sur une longueur destinée à couvrir l'arme (200) sur toute sa longueur entre l'extrémité du canon de l'arme (200) et l'arrière du boîtier de culasse de l'arme.

6. Support (1) selon l'une des revendications précédentes, **caractérisé en ce qu'**au moins un des panneaux (9b) est traversé par une ouverture latérale (15) traversant le panneau (9b) et destinée à permettre le passage d'un câble (16) raccordé avec l'arme (200).

7. Support (1) selon l'une des revendications précédentes, **caractérisé en ce que** les moyens de maintien des panneaux (9b) comprennent au moins une sangle (18) de maintien solidaire du châssis (2) et ceinturant transversalement les panneaux (9b).

8. Support (1) selon l'une des revendications précédentes, **caractérisé en ce qu'**il comporte au moins un moyen d'attache rapide (8) solidaire du châssis (2) et destiné à permettre la fixation du support (2) à une cloison (100) du véhicule.

9. Support (1) selon l'une des revendications précédentes, **caractérisé en ce que** les moyens de maintien des panneaux (9b) comprennent une housse (11) souple dotée d'une fermeture (12).

## Patentansprüche

1. Halter (1), der zur Aufnahme einer Einzelwaffe (200) an Bord eines Fahrzeugs (100) bestimmt ist, wobei der Halter (1) mindestens ein starres Gestell (2) aufweist, das an einer Trennwand (100) des Fahrzeugs befestigbar ist, wobei der Halter (1) **dadurch gekennzeichnet ist, dass** das starre Gestell (2) eine vertikale Strebe (2b) aufweist, die im Bereich eines hinteren Teils des Halters positioniert ist, um an der Trennwand (100) befestigbar zu sein und auf der eine elastische Wabenstruktur (9) befestigt ist, die mindestens zwei Platten (9b) aufweist, von denen jede mindestens eine gegenseitig gegenüberliegende innere Fläche (9c) aufweist, wobei die Waffe (200) zwischen die inneren Flächen (9c) gesteckt und durch die Annäherung der Platten (9b) gehalten werden kann, was durch ein Haltemittel (11, 18) sichergestellt wird, wobei die Wabenstruktur (9) in Bezug auf die vertikale Strebe des Gestells (2) nachgiebig ist.

2. Halter (1) nach Anspruch 1, **dadurch gekennzeichnet, dass** die Platten (9b) vertikal ausgerichtet sind, um die Waffe (200) vertikal aufzunehmen.

3. Halter (1) nach einem der vorangehenden Ansprüche, **dadurch gekennzeichnet, dass** die innere Fläche (9c) jeder Platte (9b), die bestimmt ist, sich in der Nähe der Waffe (200) zu befinden, imstande ist, der von einer soeben benutzten Waffe abgegebenen Hitze zu widerstehen.

4. Halter (1) nach Anspruch 3, **dadurch gekennzeichnet, dass** die innere Fläche (9c) jeder Platte (9b), die bestimmt ist, sich in der Nähe des Laufs (201) der Waffe (200) zu befinden, mit einer flammhemmenden Oberfläche (13) beschichtet ist.

5. Halter (1) nach einem der vorangehenden Ansprüche, **dadurch gekennzeichnet, dass** sich die Platten (9b) über eine Länge erstrecken, die bestimmt ist, die Waffe (200) über ihre gesamte Länge zwischen dem Ende des Laufs der Waffe (200) und dem hinteren Teil des Verschlussgehäuses der Waffe abzudecken.

6. Halter (1) nach einem der vorangehenden Ansprüche, **dadurch gekennzeichnet, dass** mindestens eine der Platten (9b) von einer seitlichen Öffnung (15) durchquert wird, die die Platte (9b) durchquert und bestimmt ist, den Durchgang eines mit der Waffe (200) verbundenen Kabels (16) zu gestatten.

7. Halter (1) nach einem der vorangehenden Ansprüche, **dadurch gekennzeichnet, dass** die Haltemittel der Platten (9b) mindestens einen Haltegurt (18) umfassen, der mit dem Gestell (2) fest verbunden ist und die Platten (9b) transversal umschließt.

8. Halter (1) nach einem der vorangehenden Ansprüche, **dadurch gekennzeichnet, dass** er mindestens ein Schnellbefestigungsmittel (8) aufweist, das mit dem Gestell (2) fest verbunden ist und bestimmt, die Befestigung des Halters (2) an einer Trennwand (100) des Fahrzeugs zu gestatten.

9. Halter (1) nach einem der vorangehenden Ansprüche, **dadurch gekennzeichnet, dass** die Haltemittel der Platten (9b) eine elastische Hülle (11) umfassen, die mit einem Verschluss (12) ausgestattet ist.

## Claims

1. A support (1) intended to receive an individual weapon (200) on board a vehicle (100), said support (1) including at least one rigid frame (2) which can be fixed to a partition (100) of the vehicle, said support (1) being **characterised in that** the rigid frame (2) includes a vertical bar (2b) positioned at a rear part of the support in order to be able to be fixed to the partition (100) and on which a resilient cellular structure (9) is fixed including at least two panels (9b) each including at least one so-called inner face (9c) which are opposite one another, between which inner faces (9c) the weapon (200) can be slid and held by bringing the panels (9b) closer to each other, which is ensured by a holding means (11, 18), the cellular structure (9) thus being able to bend relative to the vertical bar of the frame (2).

2. The support (1) according to claim 1, **characterised in that** the panels (9b) are oriented vertically so as to receive the weapon (200) vertically.

3. The support (1) according to one of the preceding claims, **characterised in that** the inner face (9c) of each panel (9b) that is intended to be located in the vicinity of the weapon (200) is able to withstand the heat emitted by a weapon which has just been used.

4. The support (1) according to claim 3, **characterised in that** the inner face (9c) of each panel (9b) that is intended to be located in the vicinity of the barrel (201) of the weapon (200) is coated with a fireproof surface (13).

5. The support (1) according to one of the preceding claims, **characterised in that** the panels (9b) extend over a length intended to cover the weapon (200) over its entire length between the end of the barrel of the weapon (200) and the rear of the receiver of the weapon.

6. The support (1) according to one of the preceding claims, **characterised in that** at least one of the panels (9b) is passed through by a lateral opening (15) passing through the panel (9b) and intended to allow the passage of a cable (16) connected with the weapon (200).

7. The support (1) according to one of the preceding claims, **characterised in that** the means for holding the panels (9b) comprise at least one holding strap (18) secured to the frame (2) and transversely surrounding the panels (9b).

8. The support (1) according to one of the preceding claims, **characterised in that** it includes at least one quick-release fastening means (8) secured to the frame (2) and intended to allow the fixing of the support (2) to a partition (100) of the vehicle.

9. The support (1) according to one of the preceding claims, **characterised in that** the means for holding the panels (9b) comprise a flexible cover (11) provided with a fastener (12).
